# EUROPÄISCHE PATENTANMELDUNG

(11) **EP 2 242 009 A1**
(43) Veröffentlichungstag der Anmeldung: **20.10.2010**
(21) Anmeldenummer: 09005410.7
(22) Anmeldetag: 16.04.2009
(51) Int. Cl.: G06Q 10/00

(54) **Verfahren zum Melden einer zu erledigenden Aufgabe**

(71) Anmelder: Siemens Aktiengesellschaft, 80333 München (DE)
(72) Erfinder: Munz, Vincent, 76698 Ubstadt-Weiher (DE)

(57) **Zusammenfassung**

Die Erfindung betrifft ein Verfahren zum Melden einer zu erledigenden Aufgabe (7), welche in einen Organizer (2) eines mobilen Kommunikationsteilnehmers (1) eingetragen wird, wobei die Aufgabe (7) mit einer Ortsangabe (8) versehen ist, welche anzeigt, wo die Aufgabe (7) zu erledigen ist. Um auf die zu erledigende Aufgabe (7) unabhängig von der Eingabe eines Erinnerungszeitpunktes hinzuweisen, wird vorgeschlagen, eine aktuelle Position des Kommunikationsteilnehmers (1) zu erfassen, die aktuelle Position mit der Ortsangabe zu vergleichen und in Abhängigkeit des Vergleichs die zu erledigende Aufgabe (7) zu melden.

## Beschreibung

Die Erfindung betrifft ein Verfahren zum Melden einer zu erledigenden Aufgabe, welche in einen Organizer eines mobilen Kommunikationsteilnehmers eingetragen wird, wobei die Aufgabe mit einer Ortsangabe versehen ist, welche anzeigt, wo die Aufgabe zu erledigen ist. Darüber hinaus betrifft die Erfindung einen mobilen Kommunikationsteilnehmer, welcher zur Durchführung des Verfahrens geeignet ist.

Mobile Kommunikationsteilnehmer sind an sich in vielfältiger Form, beispielsweise in Form eines so genannten Laptops bzw. Notebooks, eines Handys oder eines Personal Digital Assistants (PDA), bekannt. Diese sind häufig mit einem Programm in Form eines so genannten Organizers versehen, welcher zur Adress- und/oder Aufgabenverwaltung vorgesehen ist. Ein Programm, das einem Anwender eine derartige Funktionalität bereitstellt, ist das an sich bekannte und weit verbreitete Programm "Microsoft Office Outlook". Dieses ermöglicht einem Anwender, eine zu erledigende Aufgabe einzutragen, wobei der Anwender ferner eine Ortsangabe eintragen kann, die anzeigt, wo die Aufgabe zu erledigen ist. Ferner kann der Anwender vorgeben, ob die zu erledigende Aufgabe zeitgebunden ist, indem er einen Zeitpunkt für den Beginn der Erledigung oder ein Zeitintervall angibt, innerhalb dessen die Aufgabe zu erledigen ist. Darüber hinaus kann der Anwender eine Erinnerungsfunktion aktivieren, falls er rechtzeitig an die zeitgebundene Aufgabe erinnert werden möchte, um zu vermeiden, dass er die zu erledigende Aufgabe vergisst. Dazu trägt der Anwender einen Erinnerungszeitpunkt in den Organizer ein, wobei im einfachsten Fall dieser Zeitpunkt eine Minuten- oder eine Stundenangabe ist, die anzeigt, wie viele Minuten oder Stunden vor dem eigentlichen Termin der Anwender an die zu erledigende Aufgabe erinnert werden möchte. Die Angabe des Ortes, an welchem eine Aufgabe zu erledigen ist, dient lediglich zur Information und wird erst dann angezeigt, wenn der Anwender an die zu erledigende Aufgabe erinnert bzw. hingewiesen wird.

Der vorliegenden Erfindung liegt die Aufgabe zugrunde, ein Verfahren der eingangs genannten Art anzugeben, mit welchem auf die Erledigung einer zu erledigenden Aufgabe in verbesserter Art und Weise hingewiesen wird. Darüber hinaus ist ein mobiler Kommunikationsteilnehmer zu schaffen, welcher zur Durchführung des Verfahrens geeignet ist.

Diese Aufgabe wird im Hinblick auf das Verfahren durch die im kennzeichnenden Teil des Anspruchs 1 angegebenen, im Hinblick auf den mobilen Kommunikationsteilnehmer mit den im kennzeichnenden Teil des Anspruchs 5 angegebenen Maßnahmen gelöst.

Vorteilhaft ist, dass auf die zu erledigende Aufgabe zeitunabhängig hingewiesen wird; die Erinnerung erfolgt "ortsgebunden". Beispielsweise kann ein Anwender vorgeben, einen Kunden X in einer Stadt Y aufzusuchen, falls der Anwender irgendwann in der Stadt Y geschäftlich unterwegs ist. In diesem Fall erinnert der Organizer den Anwender an sein Vorhaben, den Kunden X aufzusuchen, falls der Anwender sich mit seinem mobilen Kommunikationsgerät in der Stadt Y aufhält, was die Lokalisierungseinrichtung, z. B. eine Lokalisierungseinrichtung in Form eines Empfängers eines Global Positioning Systems (GPS-Systems), erkennt.

In einer Ausgestaltung der Erfindung ist vorgesehen, dass die zu erledigende Aufgabe zeitabhängig ist, ein Erinnerungszeitpunkt in Abhängigkeit der aktuellen Position angepasst wird und dass die zeitabhängige zu erledigende Aufgabe zum Erinnerungszeitpunkt gemeldet wird. Ein Hinweis auf die zu erledigende Aufgabe erfolgt dadurch zeit- und ortsabhängig. Es kann z. B. vorkommen, dass ein Anwender in den Organizer eine zu einem Zeitpunkt bzw. Termin geplante Besprechung in einer Stadt und einen Erinnerungszeitpunkt eingetragen hat, der 15 Minuten vor dem geplanten Besprechungstermin liegt, der Anwender sich allerdings gerade mit seinem mobilen Kommunikationsgerät ca. 100 km von der Stadt entfernt aufhält. Ohne Anpassung des Erinnerungszeitpunktes könnte in diesem Fall der Anwender den Besprechungstermin nicht wahrnehmen. Aufgrund der Anpassung des Erinnerungszeitpunktes in Abhängigkeit der aktuellen Position - 100 km entfernt von der Stadt - kann der Anwender den Besprechungstermin wahrnehmen. Dazu wird die Entfernung zwischen dem aktuellen Aufenthaltsort und dem Besprechungsort ermittelt und es wird errechnet, um wie viele Minuten oder Stunden der Erinnerungszeitpunkt zurückgesetzt werden muss, damit der Anwender mit einem geeigneten Verkehrsmittel noch rechtzeitig an der Besprechung teilnehmen kann. Je nach der Entfernung zwischen dem aktuellen Standort des Anwenders und dem Besprechungsort wird als geeignetes Verkehrsmittel das Auto oder öffentliche Nah- und/oder Fernverkehrsmittel wie Bahn, Bus oder Flugzeug angesehen.

In einer weiteren Ausgestaltung der Erfindung ist vorgesehen, dass der Erinnerungszeitpunkt ferner in Abhängigkeit der aktuellen Verkehrsinformationen angepasst wird. Dabei werden als aktuelle Verkehrsinformationen aktuelle Staumeldungen und/oder aktuelle Fahrpläne von öffentlichen Nah- und/oder Fernverkehrsmitteln angesehen.

Dadurch, dass eine Anpassung des Erinnerungszeitpunktes dem Anwender gemeldet wird, wird der Anwender bereits vor dem Erinnerungszeitpunkt zur Erledigung einer Aufgabe aufmerksam gemacht. Er kann umgehend den Grund der Meldung erkennen und selbst prüfen, ob der angepasste Erinnerungszeitpunkt unter den aktuellen Umständen ausreichend ist, um den Besprechungstermin wahrzunehmen. Beispielsweise kann es erforderlich sein, aufgrund von nicht mehr gültigen und übermittelten Fahrplänen früher zum Besprechungsort aufzubrechen und nicht erst nach dem Hinweis auf die zu erledigende Aufgabe zum Erinnerungszeitpunkt.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

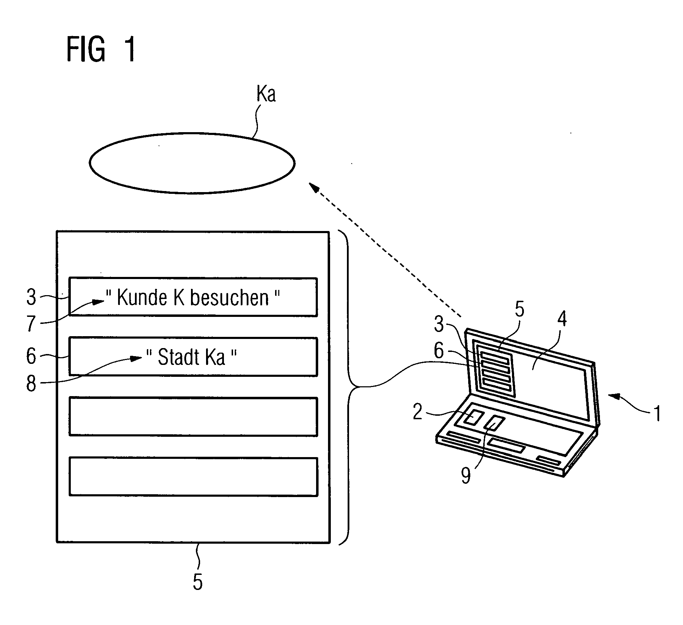

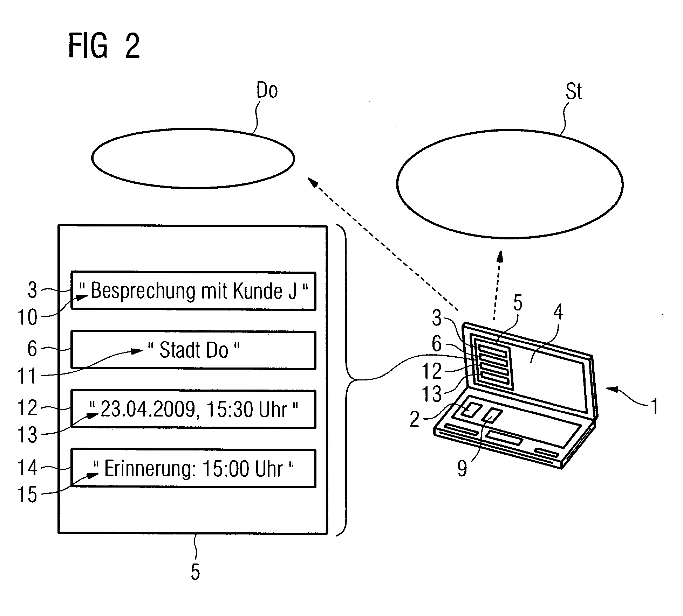

- Figuren 1 und 2: eine grafische Veranschaulichung der Erfindung anhand eines mobilen Kommunikationsteilnehmers.

Die in den Figuren 1 und 2 dargestellten gleichen Teile sind mit gleichen Bezugszeichen versehen.

In Figur 1 ist ein mobiler Kommunikationsteilnehmer in Form eines Laptops 1 dargestellt, auf welchem ein Programm 2 in einem Speicher des Laptops 1 zur Termin- und/oder Aufgabenverwaltung zum Ablauf gebracht werden kann. Dazu startet ein Anwender dieses Programm 2, wodurch dem Anwender eine Bedienoberfläche 5 auf einer Anzeigeeinheit 4 des Laptops 1 dargestellt wird. Diese Bedienoberfläche 5 ermöglicht den Eintrag einer zu erledigenden Aufgabe in ein dazu vorgesehenes erstes Eingabefeld 3 und ferner den Eintrag eines Ortes in ein zweites Eingabefeld 6, wobei der Ort anzeigt, wo die Aufgabe zu erledigen ist. Im vorliegenden Ausführungsbeispiel wird angenommen, dass der Anwender jeweils in menschenlesbarer Form in das erste Eingabefeld 3 eine Aufgabe 7 "Kunde K besuchen" und in das zweite Eingabefeld 6 einen Ort 8 "Stadt Ka" eingetragen hat. Dies bedeutet, dass der Anwender den Kunden K besuchen möchte, wenn er sich irgendwann in der Stadt Ka aufhält.
Der Laptop 1 ist ferner mit einer Lokalisierungseinrichtung 9 versehen, welche die aktuelle Position des Laptops 1 erfasst und ein der erfassten Position repräsentierendes Signal dem Programm 2 übermittelt. Eine derartige Lokalisierungseinrichtung 9 ist an sich z. B. in Form eines Global Positioning Systems (GPS)-Empfängers bekannt. Selbstverständlich kann die Lokalisierungseinrichtung auch mit einer anderen für Navigationssysteme geeigneten Hard- und Software verwirklicht sein. Das Programm 2 vergleicht ständig oder zyklisch nach vorgebbaren Zeitintervallen die aktuelle von der Lokalisierungseinrichtung 9 übermittelte Position des Laptops 1 mit dem in dem zweiten Eingabefeld 6 durch den Anwender eingetragenen Ort 8 und meldet in Abhängigkeit des Vergleichsergebnisses die in dem ersten Eingabefeld 3 eingetragene zu erledigende Aufgabe 7. Für den Fall, dass der Anwender mit seinem Laptop 1 in der Stadt Ka ankommt, was - wie erläutert - die Lokalisierungseinrichtung 9 dem Programm 2 anzeigt, meldet das Programm 2 dem Anwender visuell über die Anzeigeeinheit 4 und/oder akustisch über einen Lautsprecher des Laptops 1, dass er den Kunden K besuchen möchte.

Im Folgenden wird angenommen, dass der Anwender zu einem bestimmten Termin an einer Besprechung an einem bestimmten Ort teilnehmen möchte. Dazu trägt er jeweils in menschenlesbarer Form in das erste Eingabefeld 3 eine Aufgabe 10 "Besprechung mit Kunde J" und in das zweite Eingabefeld 6 einen Besprechungsort 11 "Stadt Do" ein (Figur 2). Darüber hinaus trägt der Anwender - ebenfalls in menschenlesbarer Form - in ein Eingabefeld 12 einen Besprechungstermin 13 "23.04.2009, 15:30 Uhr" sowie in ein Eingabefeld 14 einen Erinnerungszeitpunkt 15 "15:00 Uhr" ein. Zu dem genannten Erinnerungszeitpunkt 15 wird der Anwender visuell und/oder akustisch darauf hingewiesen, dass er zu dem eingetragenen Termin 13 an einer Besprechung 10 am Besprechungsort 11 teilnehmen möchte bzw. teilzunehmen hat. Ferner wird angenommen, dass der Anwender mit seinem Auto in einer Stadt St ankommt, welche z. B. 100 km von dem Besprechungsort 11 - der Stadt Do - entfernt ist. Die Lokalisierungseinrichtung 9 zeigt dem Programm 2 die aktuelle Position des Laptops 1 an, wobei das Programm 2 aufgrund der Entfernung des Laptops bzw. des Anwenders vom Besprechungsort 11 ermittelt, wie viel Zeit der Anwender benötigt, um die ermittelte Entfernung zwischen dem aktuellen Aufenthaltsort - der Stadt St - und dem Besprechungsort - der Stadt Do - zurückzulegen. Dabei ist im Organizer in einer Grundeinstellung hinterlegt, dass als Verkehrsmittel das Auto vorgesehen ist, wobei das Programm 2 mit einer an sich bekannten "Routenplaner-Funktionalität" versehen ist, welche die schnellste Route von der Stadt St zur Stadt Ka ermittelt. Selbstverständlich ist es möglich, dass ein an sich bekanntes Routenplaner-Programm die Fahrzeit für die Strecke zwischen der Stadt St zur Stadt Ka ermittelt und diese dem Programm zuführt, wobei das Programm 2 aufgrund dieser ermittelten Fahrzeit den Erinnerungszeitpunkt 15 anpasst. Für den Fall, dass z. B. eine Fahrzeit von einer Stunde ermittelt wird, stellt das Programm 2 den Erinnerungszeitpunkt um eine Stunde zurück, was bedeutet, dass der Erinnerungszeitpunkt zur Meldung der zu erledigenden Aufgabe - die Teilnahme an der Besprechung - auf 14:00 Uhr gesetzt wird. Selbstverständlich ist es möglich, dass der Laptop 1 mit Kommunikationsmitteln versehen ist, welche eine Kommunikationsverbindung mit mindestens einem Server ermöglichen. Auf diesem Server sind Fahrplaninformationen von öffentlichen Nah- und/oder Fernverkehrsmitteln wie Bahn, Bus oder Flugzeug hinterlegt, wobei diese Informationen durch das Programm 2 oder durch ein geeignetes weiteres Programm abgerufen werden können. Das jeweilige Programm ermittelt aus diesen Informationen die Fahrzeiten für das jeweilige Verkehrsmittel, wobei das Programm 2 für die jeweilige Fahrzeit den Erinnerungszeitpunkt 15 anpasst. Das Programm 2 kann so ausgestaltet sein, dass es zu jedem der unterschiedlichen Erinnerungszeitpunkte oder nur zu dem spätesten Erinnerungszeitpunkt auf die zu erledigende Aufgabe hinweist.

## Patentansprüche

1. Verfahren zum Melden einer zu erledigenden Aufgabe (7, 10), welche in einen Organizer (2) eines mobilen Kommunikationsteilnehmers (1) eingetragen wird, wobei die Aufgabe (7, 10) mit einer Ortsangabe (8, 11) versehen ist, welche anzeigt, wo die Aufgabe (7, 10) zu erledigen ist, **gekennzeichnet durch** die Schritte:
- Erfassen einer aktuellen Position des mobilen Kommunikationsteilnehmers (1),
- Vergleichen der aktuellen Position des Kommunikationsteilnehmers (1) mit der Ortsangabe (8, 11) und
- Melden der zu erledigenden Aufgabe (7, 10) in Abhängigkeit des Vergleichs.

2. Verfahren nach Anspruch 1, wobei die zu erledigende Aufgabe (10) zeitabhängig ist, **gekennzeichnet durch** die Schritte:
- Anpassen eines Erinnerungszeitpunkts (15) in Abhängigkeit der aktuellen Position,
- Melden der zeitabhängigen und zu erledigenden Aufgabe (10) zum Erinnerungszeitpunkt (15).

3. Verfahren nach Anspruch 2, **gekennzeichnet durch** die Schritte:
- Empfangen von aktuellen Verkehrsinformationen und
- ferner Anpassen des Erinnerungszeitpunktes (15) in Abhängigkeit der aktuellen Verkehrsinformationen.

4. Verfahren nach Anspruch 2 oder 3, **dadurch gekennzeichnet, dass** die Anpassung des Erinnerungszeitpunktes (15) gemeldet wird.

5. Mobiler Kommunikationsteilnehmer mit einem Organizer zum Eintragen einer zu erledigenden Aufgabe (7), wobei die Aufgabe (7) mit einer Ortsangabe (8, 11) versehen ist, welche anzeigt, wo die Aufgabe (7, 10) zu erledigen ist, **dadurch gekennzeichnet, dass** der mobile Kommunikationsteilnehmer (1) mit einer Lokalisierungseinrichtung (9) zur Erfassung einer aktuellen Position des Kommunikationsteilnehmers (1) versehen ist und dass der Organizer (2) die aktuelle Position mit der Ortsangabe (8, 11) vergleicht und in Abhängigkeit des Vergleichs die zu erledigende Aufgabe (7) meldet.

6. Mobiler Kommunikationsteilnehmer nach Anspruch 5, **dadurch gekennzeichnet, dass** die zu erledigende Aufgabe (10) zeitabhängig und ferner mit einem Erinnerungszeitpunkt (15) versehen ist, zu dem der Organizer (2) die zeitabhängige zu erledigende Aufgabe (10) meldet und wobei der Organizer (2) oder ein mit dem Organizer in Wirkverbindung stehendes Programm den Erinnerungszeitpunkt (15) in Abhängigkeit der aktuellen Position anpasst.

7. Kommunikationsteilnehmer nach Anspruch 6, **dadurch gekennzeichnet, dass** der Kommunikationsteilnehmer (1) Mittel zum Empfang von aktuellen Verkehrsinformationen aufweist, wobei der Organizer (2) oder das mit dem Organizer (2) in Wirkverbindung stehende Programm den Erinnerungszeitpunkt (15) ferner in Abhängigkeit der aktuellen Verkehrsinformationen anpasst.

8. Kommunikationsteilnehmer nach Anspruch 6 oder 7, **dadurch gekennzeichnet, dass** der Organizer (2) die Anpassung des Erinnerungszeitpunktes meldet.
